# EUROPEAN PATENT APPLICATION

(11) **EP 3 979 365 A1**
(43) Date of publication of application: **06.04.2022**
(21) Application number: 20813692.9
(22) Date of filing: 16.04.2020
(51) Int. Cl.: H01M 4/36, H01M 4/40, H01M 4/48, H01M 4/587

(54) **NEGATIVE-ELECTRODE ACTIVE MATERIAL FOR SECONDARY BATTERY, AND SECONDARY BATTERY**

(30) Priority: 30.05.2019 JP 2019101106
(71) Applicant: Panasonic Intellectual Property Management Co., Ltd., Osaka-shi, Osaka 540-6207 (JP)
(72) Inventor: NAKAYAMA, Takahito, Osaka-shi, Osaka 540-6207 (JP); SHIOZAKI, Tomoki, Osaka-shi, Osaka 540-6207 (JP); FURUSAWA, Daisuke, Osaka-shi, Osaka 540-6207 (JP)
(74) Representative: Vigand, Philippe
(86) International application number: PCT/JP2020/016668
(87) International publication number: WO 2020/241105

(57) **Abstract**

A negative-electrode active material for secondary batteries according to one aspect of the present invention comprises: core particles comprising a material which occludes and releases lithium metal; a first layer, which has been formed on the surface of each core particle; and a second layer, which has been formed on the first layer. The first layer comprises at least one substance selected from among amorphous carbon, carbon nanotubes, carbon nanofibers, and electroconductive polymers. The second layer comprises at least one inorganic compound selected from among oxides, phosphoric acid compounds, silicic acid compounds, and boric acid compounds.

## Description

### TECHNICAL FIELD

The present disclosure relates to a negative-electrode active material for a secondary battery and a secondary battery using the negative-electrode active material.

### BACKGROUND

Patent Literature 1 discloses a negative-electrode active material for a non-aqueous electrolyte secondary battery composed of a composite graphite material, wherein a titanium-containing inorganic oxide capable of intercalating a lithium ion is present on the surfaces and insides of the graphite particles, and the titanium-containing inorganic oxide observed by element mapping of a cross section of the graphite particle is present from the surface to the depth of 4% or more of the average particle size of the graphite particles. Moreover, Patent Literature 1 describes that the use of the negative-electrode active material improves the input characteristics and the cycle characteristics of the non-aqueous electrolyte secondary battery.

### CITATION LIST

### PATENT LITERATURE

PATENT LITERATURE 1: Japanese Unexamined Patent Application Publication No. 2014-22041

### SUMMARY

By the way, it is an important subject to inhibit heat generation when abnormality such as an internal short circuit occurs in a secondary battery such as a lithium ion battery. The technique of Patent Literature 1 is expected to exert the above effect, but there is room for improvement on inhibiting heat generation upon occurrence of the abnormality such as an internal short circuit.

A negative-electrode active material for a secondary battery that is one aspect of the present disclosure includes a core particle including a material that intercalates and releases a metal ion, a first layer including at least one selected from amorphous carbon, carbon nanotube, carbon nanofiber, and conductive polymer, and formed on a surface of the core particle described above, and a second layer including at least one inorganic compound selected from an oxide, a phosphoric acid compound, a silicic acid compound, and a boric acid compound, and formed on the aforementioned first layer.

The secondary battery that is another aspect of the present disclosure comprises a negative electrode including the aforementioned negative-electrode active material, a positive electrode, and an electrolyte.

According to the negative-electrode active material that is one aspect of the present disclosure, a secondary battery inhibiting heat generation upon occurrence of abnormality such as an internal short circuit may be provided.

### BRIEF DESCRIPTION OF DRAWINGS

FIG. 1 is a sectional view of a secondary battery that is an example of an embodiment.
FIG. 2A is a view showing a cross section of a particle of a negative-electrode active material that is an example of an embodiment.
FIG. 2B is a view showing a cross section of a particle of a negative-electrode active material that is an example of another embodiment.
FIG. 2C is a view showing a cross section of a particle of a negative-electrode active material that is an example of still another embodiment.

### DESCRIPTION OF EMBODIMENTS

The present inventors have succeeded, as a result of diligent experimentation to solve the aforementioned problem, in significantly inhibiting heat generation upon occurrence of abnormality of a battery by using a negative-electrode active material in which the aforementioned first layer and the second layer are formed on the surfaces of core particles such as graphite particles. By coating the surfaces of the graphite particles with an inorganic compound such as a metal oxide, thermal stability of the negative electrode is expected to be improved to exhibit inhibition effect of heat generation, but due to almost complete absence of surface functional groups on the surfaces of the graphite particles (basal surface), a layer of the inorganic compound is considered to be hardly formed. The present inventors have found that by covering the surfaces of the core particles such as the graphite particles with the first layer composed of amorphous carbon or the like, the second layer is stably formed.

Hereinafter, an example of embodiments of the negative-electrode active material for a secondary battery according to the present disclosure and the secondary battery using the negative-electrode active material will be described in detail. In the following, a cylindrical battery in which a wound electrode assembly 14 is housed in a bottomed cylindrical outer can 16 is illustrated, but an outer housing is not limited to the cylindrical outer can, and may be, for example, a square outer can or an outer housing composed of a laminated sheet including a metal layer and a resin layer. Moreover, the electrode assembly may be a stacked electrode assembly in which a plurality of positive electrodes and a plurality of negative electrodes are alternately stacked one by one with separators sandwiched therebetween.

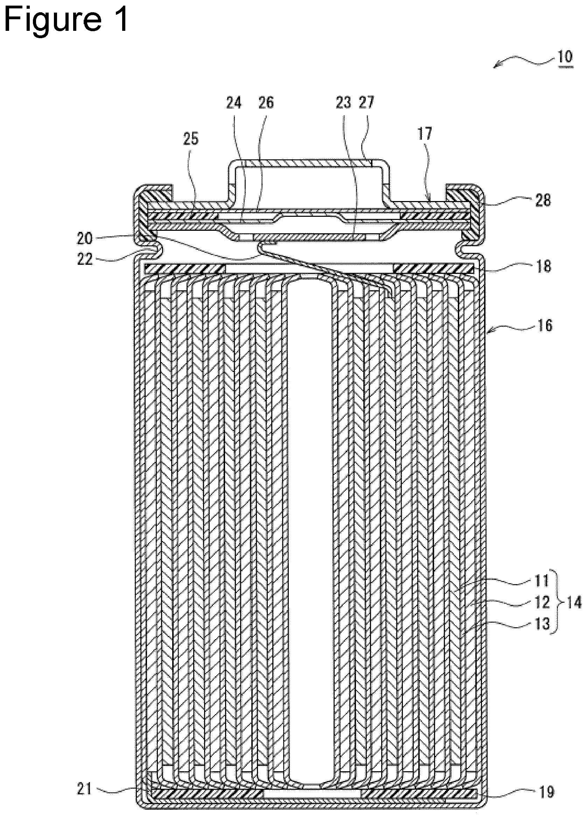

FIG. 1 is a sectional view of a secondary battery 10 that is an example of an embodiment. As illustrated in FIG. 1, the secondary battery 10 comprises a wound electrode assembly 14, an electrolyte, and an outer can 16 for housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound via the separator 13. The outer can 16 is a bottomed cylindrical metal container having an opening on one side in the axial direction, and the opening of the outer can 16 is clogged by a sealing assembly 17. In the following, for convenience of explanation, the battery on the sealing assembly 17 side is an upper side and on the bottom side of the outer can 16 is a lower side.

The electrolyte may be an aqueous electrolyte, but is preferably a non-aqueous electrolyte including a non-aqueous solvent and an electrolyte salt dissolved in the non-aqueous solvent. As the non-aqueous solvent, for example, esters, ethers, nitriles, amides, and a mixed solvent of two or more of these are used. The non-aqueous solvent may contain a halogen substituent which substitutes at least a portion of hydrogen in these solvents with a halogen atom such as fluorine. As the electrolyte salt, for example, a lithium salt such as LiPF6 is used. The electrolyte is not limited to the liquid electrolyte and may be a solid electrolyte using a gel polymer or the like.

The positive electrode 11, the negative electrode 12, and the separator 13, constituting the electrode assembly 14 are all belt-shaped long bodies and are alternately stacked in the radial direction of the electrode assembly 14 by being wound in a spiral shape. The negative electrode 12 is formed so as to have one size larger than the positive electrode 11 in order to prevent precipitation of lithium. Namely, the negative electrode 12 is formed longer than the positive electrode 11 in the longitudinal direction and the width direction (shorter direction). Two separators 13 are formed one size larger than at least the positive electrode 11 and are arranged so as to sandwich the positive electrode 11, for example. The electrode assembly 14 has a positive electrode lead 20 connected to the positive electrode 11 by welding or the like, and a negative electrode lead 21 connected to the negative electrode 12 by welding or the like.

Insulating plates 18 and 19 are arranged above and below the electrode assembly 14, respectively. In the example shown in FIG. 1, the positive electrode lead 20 extends to the sealing assembly 17 side through a through hole of the insulating plate 18, and the negative electrode lead 21 extends to the bottom side of the outer can 16 through the outside of the insulating plate 19. The positive electrode lead 20 is connected to the lower surface of an internal terminal plate 23 of the sealing assembly 17 by welding or the like, and a cap 27 that is a top plate of the sealing assembly 17 electrically connected to the internal terminal plate 23, serves as a positive electrode terminal. The negative electrode lead 21 is connected to the inner surface of the bottom of the outer can 16 by welding or the like, and the outer can 16 serves as a negative electrode terminal.

A gasket 28 is arranged between the outer can 16 and the sealing assembly 17 to secure airtightness inside the battery. The outer can 16 has a grooved portion 22 that partially projects inward on the side surface of the outer can 16 and that supports the sealing assembly 17. The grooved portion 22 is preferably formed in an annular shape along the circumferential direction of the outer can 16 and supports the sealing assembly 17 on the upper surface thereof. The sealing assembly 17 is fixed to the upper part of the outer can 16 by the grooved portion 22 and an opening end portion of the outer can 16 crimped for the sealing assembly 17.

The sealing assembly 17 has a structure in which the internal terminal plate 23, a lower vent member 24, an insulating member 25, an upper vent member 26, and the cap 27 are stacked in this order from the electrode assembly 14 side. Each member constituting the sealing assembly 17 has, for example, a disk shape or a ring shape, and each member except the insulating member 25 is electrically connected to one another. The lower vent member 24 and the upper vent member 26 are connected at their respective central portions, and the insulating member 25 is interposed between the respective peripheral portions. When the internal pressure of the battery rises due to abnormal heat generation, the lower vent member 24 deforms and breaks so as to push the upper vent member 26 toward the cap 27 side, so that the current path between the lower vent member 24 and the upper vent member 26 is blocked. When the internal pressure further rises, the upper vent member 26 breaks and a gas is discharged from the opening of the cap 27.

Hereinafter, the positive electrode 11, the negative electrode 12, and the separator 13 constituting the electrode assembly 14 will be described in detail, and in particular the negative-electrode active material constituting the negative electrode 12 will be described in detail.

### [Positive Electrode]

The positive electrode 11 has a positive electrode core body and a positive electrode mixture layer arranged on the surface of the positive electrode core body. As the positive electrode core body, a metal foil stable in the potential range of the positive electrode 11 such as aluminum or an aluminum alloy, a film in which the metal is arranged on the surface layer, etc., can be used. The positive electrode mixture layer includes a positive-electrode active material, a binder, and a conductive agent, and is preferably arranged on both sides of the positive electrode core body excluding the portion to which the positive electrode lead 20 is connected. The thickness of the positive electrode mixture layer is, for example, from 50 µm to 150 µm on one side of the positive electrode core body. The positive electrode 11 can be fabricated by for example, coating a surface of the positive electrode core body with a positive electrode mixture slurry including the positive-electrode active material, the binder, the conductive agent, etc., drying the coated film, and then compressing it to form positive electrode mixture layers on both sides of the positive electrode core body.

The positive-electrode active material is composed mainly of a lithium transition metal composite oxide. Examples of the metal element other than Li contained in the lithium transition metal composite oxide includes Ni, Co, Mn, Al, B, Mg, Ti, V, Cr, Fe, Cu, Zn, Ga, Sr, Zr, Nb, In, Sn, Ta, and W. An example of a suitable lithium transition metal composite oxide is a composite oxide containing at least one of Ni, Co, and Mn. Specific examples thereof include a lithium transition metal composite oxide containing Ni, Co and Mn, and a lithium transition metal composite oxide containing Ni, Co and Al.

As the conductive agent included in the positive electrode mixture layer, a carbon material such as carbon black, acetylene black, Ketjen black, or graphite can be exemplified. As the binder included in the positive electrode mixture layer, a fluororesin such as polytetrafluoroethylene (PTFE) or polyvinylidene difluoride (PVdF), polyacrylonitrile (PAN), a polyimide resin, an acrylic resin, or a polyolefin resin can be exemplified. These resins may be combined for use with cellulose derivatives such as carboxymethyl cellulose (CMC) or salts thereof, polyethylene oxide (PEO), etc.

### [Negative Electrode]

The negative electrode 12 has a negative electrode core body and a negative electrode mixture layer arranged on the surface of the negative electrode core body. As the negative electrode core, a metal foil stable in the potential range of the negative electrode 12 such as copper or a copper alloy, a film in which the metal is arranged on the surface layer, etc., can be used. The negative electrode mixture layer includes a negative-electrode active material and a binder, and is preferably arranged on both sides of the negative electrode core body excluding the exposed core body portion to which the negative electrode lead 21 is connected. The thickness of the negative electrode mixture layer is, for example, from 50 µm to 150 µm on one side of the negative electrode core body. The negative electrode 12 can be fabricated by for example, coating the surface of the negative electrode core body with a negative electrode mixture slurry including the negative-electrode active material, the binder, etc., drying the coated film, and then compressing it to form negative electrode mixture layers on both sides of the negative electrode core body.

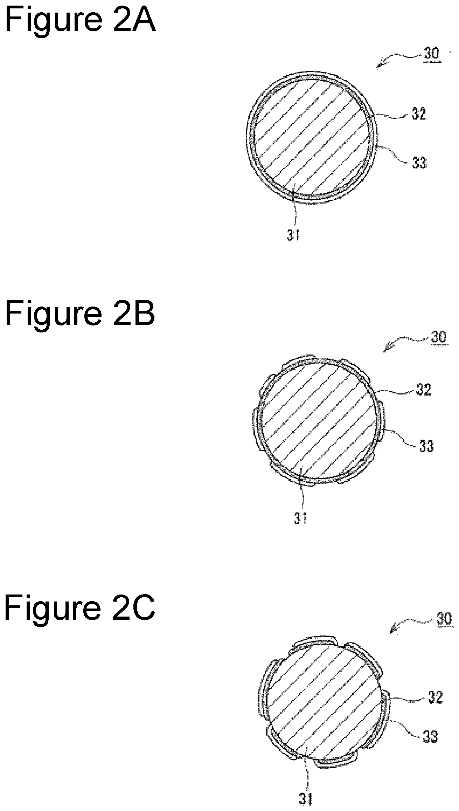

FIGS. 2A to 2C are schematic views of a negative-electrode active material 30 that is an example of embodiments. The negative-electrode active material 30 is a particulate substance and has a core particle 31 including a material that intercalates and releases a metal ion such as a lithium ion, a first layer 32 formed on the surface of the core particle 31, and a second layer 33 formed on the first layer 32. The first layer 32 includes at least one selected from amorphous carbon, carbon nanotube, carbon nanofiber, and conductive polymer. The second layer 33 includes at least one inorganic compound selected from an oxide, a phosphoric acid compound, a silicic acid compound, and a boric acid compound. The first layer 32 is formed directly on the surface of the core particle 31. The second layer 33 is formed on the surface of the core particle 31 via the first layer 32, but a portion of the second layer 33 may be formed directly on the surface of the core particle 31.

The negative-electrode active material 30 can be said to be a core-shell particle in which the core particle 31/the first layer 32/the second layer 33 are present in this order from the particle center side, and a two-layered structure shell consisting of the first layer 32 and the second layer 33 is formed on the surface of the core particle 31. By covering the surface of the core particle 31 with the first layer 32, a good-quality second layer 33 is formed, and the thermal stability of the negative electrode 12 is improved to inhibit heat generation at the time of occurrence of abnormality. The negative-electrode active material 30 may have a layer other than the first layer 32 and the second layer 33 provided that the object of the present disclosure is not impaired.

The core particle 31 is preferably composed of a material containing carbon or silicon (Si). Examples of the carbon-containing material includes natural graphite such as scaly graphite, and artificial graphites such as massive artificial graphite and graphitized mesophase carbon microbeads. Graphite is a particle having a volume-based median diameter (D50) of, for example, from 5 µm to 30 µm and preferably from 10 µm to 25 µm. D50 refers to a particle diameter corresponding to the cumulative frequency reaching 50% from the smallest particle diameter in the volume-based particle diameter distribution and is also called a medium diameter. D50 can be measured by using water as a dispersion medium with a laser diffraction particle size distribution analyzer (for example, Microtrac HRA manufactured by Nikkiso Co., Ltd.).

The Si-containing material applied to the core particle 31 may be a Si particle but is preferably a compound containing a silicon oxide phase and Si dispersed in the silicon oxide phase (hereinafter, referred to as "SiO"), or a compound containing a lithium silicate phase and Si dispersed in in the lithium silicate phase (hereinafter referred to as "LSX"). SiO and LSX are each in the form of particles having, for example, D50 that is smaller than that of graphite. The volume-based D50 of SiO and LSX is preferably from 1 µm to 15 µm and more preferably from 4 µm to 10 µm.

SiO has, for example, a sea-island structure in which fine Si particles are substantially uniformly dispersed in an amorphous silicon oxide matrix and are represented by the general formula SiOₓ (0.5 ≤ x ≤ 1.6). The content of the Si particles is preferably from 35 to 75% by mass based on the total mass of SiO, from the viewpoint of achieving both battery capacity and cycle characteristics. LSX has, for example, a sea-island structure in which fine Si particles are substantially uniformly dispersed in a lithium silicate matrix and are represented by the general formula Li_{2z}SiO_{(2+z)} (0 < z < 2). The content of the Si particles is preferably from 35 to 75% by mass based on the total mass of LSX, as in the case of SiO.

For the negative-electrode active material 30, the material containing carbon such as graphite and the Si-containing material such as SiO and LSX may be combined for use as the core particle 31. For example, when graphite and SiO are combined for use, an example of the mixing ratio is from 60:40 to 95:5 in terms of mass ratio.

As described above, the first layer 32 is composed mainly of at least one selected from amorphous carbon, carbon nanotube, carbon nanofiber, and conductive polymer. Above all, the first layer 32 is preferably composed of amorphous carbon. The first layer 32 may be substantially composed of the amorphous carbon alone or may include a material other than the amorphous carbon provided that the object of the present disclosure is not impaired. The first layer 32 has conductivity equal to or higher than that of the core particle 31, and also contributes to lowering the resistance of the battery.

The first layer 32 may be formed so as to cover the entire surface of the core particle 31 as illustrated in FIGS. 2A and 2B, may be dotted on the surface of the core particle 31 as illustrated in FIG. 2C, or may be formed in a mesh pattern. In the example shown in FIG. 2C, a portion of the surface of the core particle 31 is exposed without being covered by the first layer 32. The thickness of the first layer 32 is, for example, 1 µm or less, preferably from 1 nm to 500 nm, and more preferably from 10 nm to 100 nm. The thickness of the first layer 32 can be measured by observing the particle cross section of the negative-electrode active material 30 with a transmission electron microscope (TEM) (the same applies to the second layer 33).

The first layer 32 is preferably formed in an amount of from 0.1 to 5% by mass based on the mass of the core particle 31. In this case, a wide area of the surface of the core particle 31 is covered with the first layer 32. The percentage of the surface of the core particle 31 covered with the first layer 32, i.e., the coverage of the surface of the core particle 31 with the first layer 32 is preferably 60% or more and more preferably 70% or more, and it may be substantially 100%. The coverage is measured by X-ray photoelectron spectroscopy (XPS) or Auger electron spectroscopy (AES). Further, the first layer 32 is more preferably formed on a portion without surface functional groups, for example, on a basal surface or the like, in the case of graphite. The presence of the first layer 32 as a buffer layer facilitates the formation of the second layer 33, which is normally difficult to be formed on a surface having no surface functional groups.

The first layer 32 can be formed by mixing coal pitch, petroleum pitch, a phenol resin, conductive polymer paste or the like with the core particle 31 and carrying out heat treatment. Alternatively, it can be formed by a CVD method using acetylene, methane or the like. Further, the first layer 32 may be formed by fixing carbon powder such as carbon black on the surface of the core particle 31 by using a binder.

As described above, the second layer 33 is composed mainly of at least one inorganic compound selected from an oxide, a phosphoric acid compound, a silicic acid compound, and a boric acid compound. The inorganic compound constituting the second layer 33 is preferably a compound having no lithium ion conductivity from the viewpoint of improving safety, etc. The presence or absence of lithium ion conductivity can be evaluated as follows. A pellet is produced based on the compound and lithium foils are attached to both ends of the pellet. The presence or absence of lithium ion conductivity can be evaluated based on the value of the flowing current by applying a constant voltage to the Li/pellet/Li stack (when no current flows, the lithium ion conductivity is determined to be zero.).

The inorganic compound constituting the second layer 33 preferably contains at least one metal element selected from titanium, aluminum, zirconium, and magnesium. The second layer 33 has better adhesion to the first layer 32 than the surface of the core particle 31 and is evenly formed on the surface of the core particle 31 covered with the first layer 32. The second layer 33 may be less conductive than the first layer 32.

Specific examples of the inorganic compound constituting the second layer 33 include metal oxides such as titanium oxide, aluminum oxide, zirconium oxide, magnesium oxide and silicon oxide, metal phosphates such as sodium phosphate, potassium phosphate, calcium phosphate, magnesium phosphate, and aluminum phosphate, phosphate esters such as ammonium polyphosphate, condensed phosphates such as melamine polyphosphate, metal borates such as sodium borate, potassium borate, calcium borate, magnesium borate, and aluminum borate, condensed borates such as borate ester and melamine borate, and metal silicates such as sodium silicate, potassium silicate, calcium silicate, magnesium silicate, barium silicate and manganese silicate.

The second layer 33 is formed on the surface of the core particle 31 via the first layer 32 and may be formed so as to cover the entire surface of the core particle 31 as illustrated in FIG. 2A, and as illustrated in FIGS. 2B and 2C, it may be dotted on the surface of the core particle 31 or may be formed in a mesh pattern on the surface. In the example shown in FIG. 2B, the first layer 32 is formed over the substantially entire surface of the core particle 31, and the second layer 33 is formed over a wide area except for a portion on the first layer 32. In the example shown in FIG. 2C, the first layer 32 is formed over a wide area except for a portion of the surface of the core particle 31, and the second layer 33 is formed on the first layer 32 and directly on the surface of the core particle 31. In both cases, a portion of the first layer 32 is not covered with the second layer 33 and is exposed on the outermost surface of the negative-electrode active material 30.

The thickness of the second layer 33 is, for example, from 1 µm or less, preferably from 1 nm to 500 nm, and more preferably from 10 nm to 100 nm. The second layer 33 is preferably formed in an amount of from 0.1 to 5% by mass based on the mass of the core particle 31. In this case, a wide area of the surface of the core particle 31 is covered with the second layer 33. The percentage of the surface of the core particle 31 covered with the second layer 33, i.e., the coverage of the surface of the core particle 31 with the second layer 33 is preferably 50% or more and more preferably 60% or more, and it may be substantially 100%. The coverage of the first layer 32 with the second layer 33 is, for example, from 60% to 95% and preferably from 60% to 80%.

The second layer 33 can be formed by mixing an alkoxide corresponding to titanium oxide, aluminum oxide, zirconium oxide, silicon oxide, magnesium oxide or the like with the core particle 31 having the first layer 32 formed on the surfaces thereof and adding a small amount of water followed by heat treatment. This method is generally called a sol-gel method. The second layer 33 can be formed by mixing any one of other various phosphoric acid compounds, boric acid compounds, silicic acid compounds and the like with the core particle 31 having the first layer 32 formed on the surfaces thereof, and filtering the impurities followed by drying.

As the binder included in the negative electrode mixture layer, fluororesin, PAN, polyimide, acrylic resin, polyolefin, or the like can be used as in the case of the positive electrode 11, however, styrene-butadiene rubber (SBR) is preferably used. Further, the negative electrode mixture layer preferably further includes CMC or a salt thereof, a polyacrylic acid (PAA) or a salt thereof, polyvinyl alcohol (PVA), or the like. Among them, SBR and CMC or a salt thereof, PAA or a salt thereof are suitably combined for use.

### [Separator]

A porous sheet having ion permeability and insulating property is used for the separator 13. Specific examples of the porous sheet include a microporous thin film, a woven fabric, and a nonwoven fabric. As materials for the separator 13, polyolefins such as polyethylene and polypropylene, cellulose, and the like are suitably used. The separator 13 may have either a single-layer structure or a multilayer structure. A heat-resistant layer or the like may be formed on the surface of the separator 13.

### EXAMPLES

Hereinafter, the present disclosure will be further described with reference to Examples, but the present disclosure is not limited to these Examples.

### <Example 1>

### [Preparation of Positive Electrode]

A lithium transition metal composite oxide represented by the general formula: LiNi_{0.82}Co_{0.15}Al_{0.03}O₂ was used as the positive-electrode active material. The positive-electrode active material, acetylene black, and polyvinylidene difluoride were mixed at a solid content mass ratio of 97:2:1, and N-methyl-2-pyrrolidone (NMP) was used as a dispersion medium to prepare a positive electrode mixture slurry. Next, both sides of a positive electrode core body made of aluminum foil were coated with this positive electrode mixture slurry, and the coated film was dried and compressed, and then cut into a predetermined electrode size to fabricate a positive electrode in which positive electrode mixture layers were formed on both sides of the positive electrode core body.

### [Fabrication of Negative-Electrode Active Material]

Graphite having a D50 of about 50 µm was used as the core particle. After immersing the core particle consisting of graphite in petroleum pitch, it was calcinated at 800°C in a reducing atmosphere such as an Ar gas to form a first layer consisting of amorphous carbon on the substantially entire surface of the core particle. The first layer was formed in an amount of 0.5% by mass based on the core particle. The core particle on which the first layer was formed, and a titanium oxide (TiO₂) sol were mixed and calcinated at 400°C to obtain a negative-electrode active material in which a second layer consisting of TiO₂ was formed on the first layer. The second layer was formed in an amount of 1% by mass based on the core particle.

### [Fabrication of Negative Electrode]

The obtained negative-electrode active material, a dispersion of styrene-butadiene rubber (SBR), and sodium carboxymethyl cellulose (CMC-Na) were mixed at a solid content mass ratio of 98:1:1 and water was used as a dispersion medium to prepare a negative electrode mixture slurry. Next, both sides of a negative electrode core body made of copper foil were coated with this negative electrode mixture slurry, the coated film was dried and compressed, and then cut into a predetermined electrode size to fabricate a negative electrode having negative electrode mixture layers formed on both sides of the negative electrode core body.

### [Preparation of Non-Aqueous Electrolyte Solution]

Ethylene carbonate (EC), methyl ethyl carbonate (EMC), and dimethyl carbonate (DMC) were mixed in a volume ratio of 2:1:7. A non-aqueous electrolyte was prepared by dissolving LiPF6 in the mixed solvent to a concentration of 1.4 mol/L.

### [Fabrication of Secondary Battery]

The positive electrode to which an aluminum positive electrode lead was attached and the negative electrode to which a nickel negative electrode lead was attached were spirally wound with a polyethylene separator interposed therebetween and formed into a flat shape to fabricate a wound electrode assembly. This electrode assembly was housed in an outer housing composed of an aluminum laminate, and after injecting the aforementioned non-aqueous electrolyte solution, the opening of the outer housing was sealed to fabricate a non-aqueous electrolyte secondary battery.

### <Example 2>

A negative electrode and a non-aqueous electrolyte secondary battery were fabricated in the same manner as in Example 1 except that aluminum oxide (Al₂O₃) was used instead of TiO₂ in the fabrication of the negative-electrode active material.

### <Example 3>

A negative electrode and a non-aqueous electrolyte secondary battery were fabricated in the same manner as in Example 1 except that zirconium oxide (ZrO₂) was used instead of TiO₂ in the fabrication of the negative-electrode active material.

### <Example 4>

A negative electrode and a non-aqueous electrolyte secondary battery were fabricated in the same manner as in Example 1 except that magnesium oxide (MgO) was used instead of TiO₂ in the fabrication of the negative-electrode active material.

### <Example 5>

A negative electrode and a non-aqueous electrolyte secondary battery were fabricated in the same manner as in Example 1 except that silicon oxide (SiO₂) was used instead of TiO₂ in the fabrication of the negative-electrode active material.

### <Example 6>

A negative electrode and a non-aqueous electrolyte secondary battery were fabricated in the same manner as in Example 1 except that aluminum phosphate (AlPO₄) was used instead of TiO₂ in the fabrication of the negative-electrode active material.

### <Example 7>

A negative electrode and a non-aqueous electrolyte secondary battery were fabricated in the same manner as in Example 1 except that aluminum phosphate (Al₂(PO₄)₂) was used instead of TiO₂ in the fabrication of the negative-electrode active material.

### <Example 8>

A negative electrode and a non-aqueous electrolyte secondary battery were fabricated in the same manner as in Example 1 except that potassium silicate (K₂SiO₃) was used instead of TiO₂ in the fabrication of the negative-electrode active material.

### <Example 9>

A negative electrode and a non-aqueous electrolyte secondary battery were fabricated in the same manner as in Example 1 except that a mixture of the carbon-based active material used in Example 1 and the Si-based active material represented by SiOₓ (x = 1) at a mass ratio of 94:6 were used as the core particle of the negative-electrode active material.

### <Comparative Example 1>

A negative electrode and a non-aqueous electrolyte secondary battery were fabricated in the same manner as in Example 1 except that the first layer and the second layer were not formed on the surface of the core particle in the fabrication of the negative-electrode active material.

### <Comparative Example 2>

A negative electrode and a non-aqueous electrolyte secondary battery were fabricated in the same manner as in Example 1 except that the second layer was not formed on the surface of the core particle in the fabrication of the negative-electrode active material.

### <Comparative Example 3>

A negative electrode and a non-aqueous electrolyte secondary battery were fabricated in the same manner as in Example 1 except that the first layer was not formed on the surface of the core particle in the fabrication of the negative-electrode active material.

### [Measurement of Coverage of Core Particle Surface with Second Layer]

For each of the negative-electrode active materials of Examples and Comparative Examples, a plurality of regions of 100 µmϕ arbitrarily selected were measured with X-ray photoelectron spectroscopy (XPS), and the coverage of the surface of the core particle with the second layer formed thereon was determined in consideration of the atomic and molecular radii from the various atomic ratios obtained. Another method for determining the coverage may be a method for determining it by carrying out element mapping measurement on an arbitrary region of 100 µmϕ with Auger electron spectroscopy (AES).

The evaluation results are shown in Table 1.

### [Measurement of Battery Resistance (DC-IR)]

Each of the secondary batteries of Examples and Comparative Examples was charged in a temperature environment of 25°C at a constant current of 0.3 C until the battery voltage reached 4.2 V, and then was charged at a constant voltage until the current value was down to 0.05 C. Following that, the battery was discharged at a constant current of 0.3 C to adjust the state of charge (SOC) to 50%. Next, the voltage values when applying discharge currents of 0 A, 0.1 A, 0.5 A, and 1.0 A for 10 seconds, were acquired. DC-IR was calculated from the absolute value of the slope when the voltage values after 10 seconds for each discharge current value were linearly approximated by the least-squares method. The evaluation results are shown in Table 1.

### [Nail Puncture Test]

A nail puncture test was carried out for each of the secondary batteries of Examples and Comparative Examples according to the following procedure. The evaluation results are shown in Table 1.
(1) In an environment of 25°C, battery charge was carried out at a constant current of 600 mA until the battery voltage reached 4.2 V, and then the charge was continued at a constant voltage until the current value reached 90 mA.
(2) In an environment of 25°C, the tip of a round nail having a thickness of 2.7 mmcp was brought into contact with the center of the side surface of the battery charged in (1), and the round nail was punctured into the electrode assembly of the battery in the stacked direction thereof at a speed of 1 mm/sec, and immediately after detecting a battery voltage drop due to an internal short circuit, the round nail was stopped puncturing.
(3) The battery surface temperature was measured 1 minute after the battery started short-circuiting by the round nail.

**[Table 1]**

| | Core particle | First layer | Second layer | Coverage with second layer (%) | Battery resistance (mΩ) | Battery temperature after nail puncture test (°C) |
|---|---|---|---|---|---|---|
| Example 1 | Graphite | Amorphous carbon | TiO₂ | 90 | 30 | 50 |
| Example 2 | Graphite | Amorphous carbon | Al₂O₃ | 95 | 32 | 60 |
| Example 3 | Graphite | Amorphous carbon | ZrO₂ | 80 | 31 | 55 |
| Example 4 | Graphite | Amorphous carbon | MgO | 75 | 30 | 70 |
| Example 5 | Graphite | Amorphous carbon | SiO₂ | 85 | 28 | 60 |
| Example 6 | Graphite | Amorphous carbon | AlPO₄ | 80 | 30 | 55 |
| Example 7 | Graphite | Amorphous carbon | Al₂(BO₄)₂ | 65 | 33 | 60 |
| Example 8 | Graphite | Amorphous carbon | K₂SiO₃ | 70 | 34 | 80 |
| Example 9 | Graphite + SiO | Amorphous carbon | TiO₂ | 85 | 30 | 60 |
| Comparative Example 1 | Graphite | None | None | - | 32 | 100 |
| Comparative Example 2 | Graphite | Amorphous carbon | None | - | 28 | 120 |
| Comparative Example 3 | Graphite | None | TiO₂ | 30 | 38 | 110 |

As shown in Table 1, the temperature rise of all the batteries of Examples after the nail puncture test was smaller than that of the batteries of Comparative Examples. Namely, the batteries of Examples significantly inhibit heat generation upon occurrence of the internal short circuit as compared with the batteries of Comparative Examples. Not only when the negative-electrode active material in which none of the first layer and the second layer are present is used on the surface of the graphite particle (Comparative Example 1), but also when the negative-electrode active material in which one of the layers is not present is used (Comparative Examples 2 and 3), the inhibition effect of heat generation cannot be obtained either.

The batteries of Examples had lower battery resistance and inhibited the battery temperature rise after the nail puncture test as compared with the batteries of Comparative Examples 1 and 3. Further, the batteries of Examples inhibited the battery temperature rise after the nail puncture test as compared with the battery of Comparative Example 2. The battery resistance of the battery of Comparative Example 2 is, on the other hand, lower than that of the batteries of Examples.

In the batteries of Comparative Examples 2 and 3, the battery temperature after the nail puncture test rose than that of the battery of Comparative Example 1, but because the first layer or the second layer was formed on the surface of the core particle, the battery temperature after the nail puncture test is assumed not to be likely to rise. When the negative-electrode active materials of Examples each in which the first layer and the second layer were formed in this order on the surface of the core particle was used, the battery temperature rise after the nail puncture test was significantly inhibited.

In the negative-electrode active materials of Examples, the first layer is considered to function as a cushioning material between the core particle and the second layer. Namely, the substance constituting the second layer is considered to have adhered sufficiently on the surface of the core particle with the first layer interposed between the core particle and the second layer. Therefore, due to the presence of the second layer in the sufficient amount on the surface of the core particle in the negative-electrode active materials of Examples and use of the negative-electrode active materials of Examples, the inhibition effect on temperature rise that cannot be obtained with the negative-electrode active material of Comparative Example 3, can be obtained.

TiO₂ is included in the second layer of each of the negative-electrode active materials of Example 1 and Comparative Example 3. When the negative-electrode active material of Comparative Example 3 in which the second layer was directly formed on the surface of the core particle was used, the battery resistance was significantly increased as compared with the battery of Comparative Example 1. In the battery of Example 1, on the contrary, the increase in battery resistance as in the battery of Comparative Example 3 can be inhibited because the first layer was formed between the core particle and the second layer, and further the battery resistance could be lowered more than in the case where the second layer was not present (Comparative Example 1).

### REFERENCE SIGNS LIST

10 secondary battery
11 positive electrode
12 negative electrode
13 separator
14 electrode assembly
16 outer can
18,19 insulating plate
20 positive electrode lead
21 negative electrode lead
22 grooved portion
23 internal terminal plate
24 lower vent member
25 insulating member
26 upper vent member
27 cap
28 gasket
30 negative-electrode active material
31 core particle
32 first layer
33 second layer

## Claims

1. A negative-electrode active material for a secondary battery, comprising:
a core particle including a material that intercalates and releases a metal ion;
a first layer including at least one selected from amorphous carbon, carbon nanotube, carbon nanofiber, and conductive polymer, and formed on a surface of the core particle; and
a second layer including at least one inorganic compound selected from an oxide, a phosphoric acid compound, a silicic acid compound, and a boric acid compound, and formed on the first layer.

2. The negative-electrode active material for a secondary battery according to claim 1, wherein the core particle is composed of a material containing carbon or silicon.

3. The negative-electrode active material for a secondary battery according to claim 1 or 2, wherein the first layer is composed of amorphous carbon and has a thickness of 1 µm or less.

4. The negative-electrode active material for a secondary battery according to any one of claims 1 to 3, wherein the inorganic compound constituting the second layer is a compound having no lithium ion conductivity.

5. The negative-electrode active material for a secondary battery according to any one of claims 1 to 4, wherein the inorganic compound constituting the second layer contains at least one metal element selected from titanium, aluminum, zirconium, and magnesium.

6. The negative-electrode active material for a secondary battery according to any one of claims 1 to 5, wherein a coverage of the first layer with the second layer is from 60% to 95%.

7. A secondary battery, comprising:
a negative electrode including the negative-electrode active material according to any one of claims 1 to 6;
a positive electrode; and
an electrolyte.
